# EUROPEAN PATENT APPLICATION

(11) **EP 1 629 715 A1**
(43) Date of publication of application: **01.03.2006**
(21) Application number: 05076937.1
(22) Date of filing: 23.08.2005
(51) Int. Cl.: A01K 91/047

(54) **A fishing link**

(30) Priority: 31.08.2004 GB 0419297
(71) Applicant: FOX INTERNATIONAL GROUP LIMITED, Hainault, Essex IG6 3UT (GB)
(72) Inventor: Cottis, Maxwell Stewart, Braintree, Essex CM7 9FD (GB)
(74) Representative: Crouch, David John

(57) **Abstract**

A fishing link (12) which has first attachment means (20) at one location on the link and second attachment means (22) at another location on the link (12) opposite to the said one location. One of the attachment means (20) has a main fishing line attached to it when the link (12) is in use, and the other attachment means (22) has a hook line (34) attached to it when the link (12) is in use. The attachment means (22) to which the hook line (34) is attached is in the form of a hook (26). The hook (26) may have an outwardly turned end (28) so that it has the form of a shepherd's crook, to facilitate attachment of one end of a hook line (34).

## Description

The present invention relates to a fishing link which has first attachment means at one location on the link and second attachment means at another location on the link opposite to the said one location, one of the attachment means having a main fishing line attached to it when the link is in use, and the other attachment means having a hook line attached to it when the link is in use.

One previously proposed such construction comprises a swivel link having an elongate hollow cylindrical body in the hollow of which are held respective anchor portions of two attachment rings or eyelets which project from opposite ends of the cylindrical body with the extended central longitudinal axis of the body coinciding with respective diameters of the rings. These rings therefore can rotate about that axis for which reason the link is called a swivel link.

One problem encountered with such a previously proposed link is the time it takes to change the hook line. Typically one end of the hook line is threaded through one of the eyelets and tied thereto. It is therefore an intricate process to untie the hook line and then to thread and tie a different hook line to the eyelet.

The present invention seeks to provide a remedy.

Accordingly the present invention is directed to a fishing link having the construction set out in the opening paragraph of the present specification, in which the attachment means to which the hook line is attached is in the form of a hook. The hook may have an outwardly turned end so that it has the form of a shepherd's crook, to facilitate attachment of one end of a hook line.

The present invention extends to a fishing rig comprising a fishing link in accordance with the present invention, and a hook line attached to the hook of the link. The end of the hook line which is attached to the hook of the link may be looped so the it can be readily slipped onto the link hook and readily slipped off to enable a different hook line to be attached to the link hook. The hook line preferably has a fishing hook attached to it, spaced apart from the link. The hook line may also have a float attached to it adjacent to the fishing hook. The hook line may also have a weight attached to it.

Preferably, a sleeve surrounds the link hook and surrounds and extends along the hook line therefrom to reduce the likelihood that the hook line will slip off the link hook accidentally. The sleeve may taper in a direction away from the link to reduce the likelihood that it will get snagged. The sleeve may be such that it can be readily slid along the hook line away from the link hook to facilitate removal of the hook line from the link and replacement by a different hook line. After attachment to the link hook, the sleeve may be slid up the hook line towards the link until it covers the link hook with the looped end of the hook line engaging the link hook.

The link hook may be resilient with its end or a portion close to its end touching, but readily sprung away from, a neck portion of the hook, so that the link hook provides a readily openable loop.

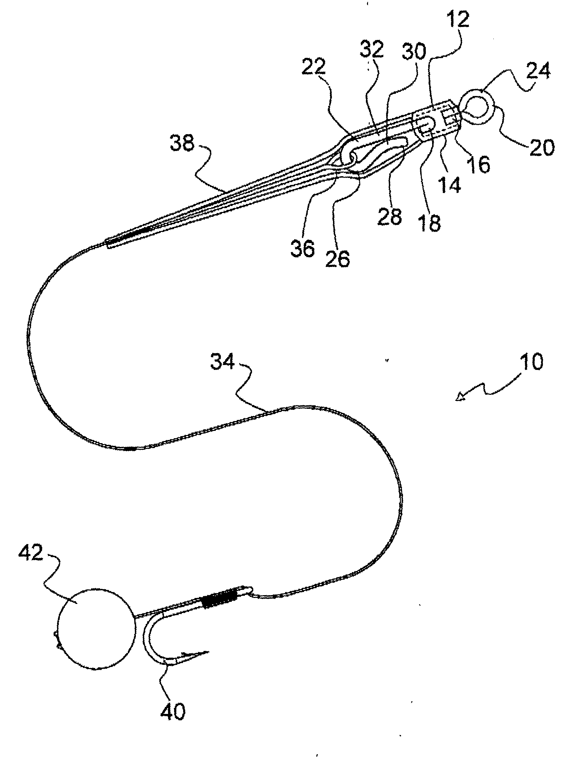

An example of a fishing link embodying the present invention, and an example of a fishing rig embodying the present invention, will now be described with reference to the accompanying drawing, the single Figure of which shows a perspective view of a fishing rig in accordance with the present invention having a fishing link in accordance with the present invention.

The fishing rig 10 shown in the drawing shows a swivel fishing link 12 comprising a cylindrical hollow body 14 within the hollow of which are retained respective anchor portions 16 and 18 of two attachment means 20 and 22. One of the attachment means 20 is in the form of a ring or eyelet 24 a diameter of which coincides with the extended longitudinal axis of the cylindrical body 14.

The other of the attachment means 22 is in the form of a resilient hook 26. The extreme end 28 of the hook 26 is curved outwardly so that the hook 26 has the form of a shepherd's crook. A portion 30 of the hook 26 near to the extreme end 28 is close to or touches a neck portion 32 of the hook 26, so that the latter forms a closed but readily openable loop.

A hook line 34 has a looped end 36 which has been slipped onto the link hook 26 so that it engages the latter. A transparent flexible plastics sleeve 38 surrounds the hook 26 and extends around and part of the way along the hook line 34 away from the link 12. It tapers in a direction away from the link 12.

The other end of the hook line 34 has a fishing hook 40 tied to it as well as a spherical float 42.

To change the hook line 34, the sleeve 38 is slid down along the hook line 34 to expose the link hook 26, and the looped end 36 of the hook line 34 is disengaged from the link hook 26. A different hook line can than be attached to the link hook 26, and its sleeve then slid up to cover the link hook 26 and reduce the likelihood that the looped end of the replacement hook line will be accidentally disengaged from the link hook 26. At the same time, the tapering of the sleeve reduces the likelihood that it will become snagged whilst it is in use.

Many variations and modifications to the illustrated fishing link and rig may occur to the reader without taking the resulting construction outside the scope of the present invention. For example, the hook line 34 may also have a weight tied to it. The link hook 26 does not have to be resilient as it may have a gap between the portions 30 and 32 through which the looped end of a hook line can be threaded.

## Claims

1. A fishing link (12) which has first attachment means (20) at one location on the link and second attachment means (22) at another location on the link (12) opposite to the said one location, one of the attachment means (20) having a main fishing line attached to it when the link (12) is in use, and the other attachment means (22) having a hook line (34) attached to it when the link (12) is in use, **characterised in that** the attachment means (22) to which the hook line (34) is attached is in the form of a hook (26).

2. A fishing link (12) according to claim 1, **characterised in that** the hook (26) has an outwardly turned end (28) so that it has the form of a shepherd's crook, to facilitate attachment of one end of a hook line (34).

3. A fishing rig (10) comprises a fishing link (12) as claimed in claim 1 or claim 2, and a hook line (34) attached to the hook (26) of the link (12).

4. A fishing rig (10) according to claim 3, **characterised in that** the end of the hook line (34) which is attached to the hook (26) of the link (12) is looped so that it can be readily slipped onto the link hook (26) and readily slipped off to enable a different hook line (34) to be attached to the link hook (26).

5. A fishing rig (10) according to claim 3 or claim 4, **characterised in that** the hook line (34) has a fishing hook (40) attached to it, spaced apart from the link (12).

6. A fishing rig (10) according to claim 5, **characterised in that** the hook line (34) has a bait (42) attached to it adjacent to the fishing hook (40).

7. A fishing rig (10) according to any one of claims 3 to 6, **characterised in that** the hook line (34) has a weight attached to it.

8. A fishing rig (10) according to any one of claims 3 to 7, **characterised in that** a sleeve (38) surrounds the link hook (26) and surrounds and extends along the hook line (34) therefrom to reduce the likelihood that the hook line (34) will slip off the link hook (26) accidentally.

9. A fishing rig (10) according to claim 8, **characterised in that** the sleeve (38) tapers in a direction away from the link (12) to reduce the likelihood that it will get snagged.

10. A fishing rig (10) according to claim 8 or claim 9, **characterised in that** the sleeve (38) is such that it can be readily slid along the hook line (34) away from the link hook (26) to facilitate removal of the hook line (34) from the link (12) and replacement by a different hook line (34).

11. A fishing link (12) or a fishing rig (10) according to any preceding claim, **characterised in that** the link hook (26) is resilient with its end or a portion (30) close to its end touching or close to, but readily sprung away from, a neck portion (32) of the hook (26), so that the link hook (26) provides a readly openable loop.
